# EUROPÄISCHE PATENTSCHRIFT

(11) **EP 3 684 579 B1**
(45) Veröffentlichungstag und Bekanntmachung des Hinweises auf die Patenterteilung: **10.08.2022**
(21) Anmeldenummer: 18800502.9
(22) Anmeldetag: 24.10.2018
(51) Int. Cl.: B29C 39/00, B29C 31/04, B29C 31/06, B29C 31/08, B29C 39/24, B29C 39/38, B29C 39/42, H01F 27/30, H01F 27/32, B29C 48/29, B29C 48/00, B29C 48/14, B29C 48/76, B29C 48/91, B29B 7/84, B29B 11/06, B29C 48/25, B29C 48/28, B29C 48/475, B29L 31/34, B29C 39/10

(54) **VERFAHREN ZUM HERSTELLEN VON ABSTANDSHALTERN FÜR EINE WICKLUNGSEINHEIT**
METHOD FOR PRODUCING SPACERS FOR A WINDING UNIT
PROCÉDÉ SERVANT À FABRIQUER DES ÉCARTEURS POUR UNE UNITÉ D'ENROULEMENT

(30) Priorität: 21.11.2017 DE 102017220781
(43) Veröffentlichungstag der Anmeldung: 29.07.2020
(73) Patentinhaber: Siemens Energy Global GmbH & Co. KG, 81739 München (DE)
(72) Erfinder: NAVARRO, Martin Alsina, 13219-710 Jundiai-SP (BR); MORENO, Andre Luiz, 13224-240 Varzea Paulista (BR); SILLE, Richard, 73230 Kirchheim (DE)
(86) Internationale Anmeldenummer: PCT/EP2018/079123
(87) Internationale Veröffentlichungsnummer: WO 2019/101459

(56) Entgegenhaltungen:
- EP-A2- 2 236 261
- DE-A1- 2 032 530
- DE-A1- 4 119 415
- DE-A1-102015 114 397
- US-A- 4 001 368
- US-A1- 2007 279 177
- US-A1- 2015 371 775

## Beschreibung

Die Erfindung betrifft ein Verfahren zum Herstellen von Abstandshaltern für eine Wicklungseinheit eines elektrischen Hochspannungsgeräts.

Die DE 20 32 530 A1 betrifft ein Verfahren zur Herstellung einer in Gießharz vergossenen Spulenanordnung aus einer Vielzahl elektrisch miteinander verschalteten Einzelspulen. Bei dem Verfahren werden aus Gießharz Stützleisten gegossen, die an mindestens drei Stellen am Umfang der Einzelspulen so angeklebt werden, dass die Spulen richtige die Lage und die vorbestimmten Abstände für den späteren Verguss haben. Die Spulenanordnung erhält so einen für die weitere Handhabung und Lagerung ausreichenden Zusammenhalt.

Die US 2007/0279177 A1 betrifft einen Transformator und ein Verfahren zum Herstellen eines Transformators.

Weiterer Stand der Technik ist in der US 2015/371775 A1, der US 2 001 368 A und der EP 2 236 261 A2 beschrieben.

Ein elektrisches Hochspannungsgerät ist aus der EP 2433289 B1 bekannt. Dort ist ein so genannter Trockentransformator mit einer Wicklungseinheit beschrieben, die mit zwei konzentrisch zueinander angeordneten Wicklungen ausgerüstet ist. Die beiden Wicklungen sind über einen magnetisierbaren Eisenkern induktiv miteinander gekoppelt, wobei die außen liegende Wicklung für höhere Spannungen ausgelegt ist und daher als Oberspannungswicklung bezeichnet wird. Eine an der Oberspannungswicklung anliegende Eingangsspannung erzeugt einen Induktionsstrom, der an der Unterspannungswicklung eine Ausgangsspannung induziert, die u.a. von dem Verhältnis der Windungszahlen zwischen Ober- und Unterspannungswicklung abhängig ist. Zur elektrischen Isolierung der Wicklungen sind diese in einem festen Isolierkörper aus einem ausgehärteten Polymer, wie beispielsweise Epoxydharz, angeordnet.

Bei der Herstellung der vorbekannten Wicklungseinheit werden die Wicklungen zunächst unter Verwendung so genannter Abstandshalter zueinander positioniert und anschließend mit flüssigem Harz vergossen. Zur Vermeidung von Feuchtigkeit und Lufteinschlüssen im Isolierkörper findet das Vergießen und das Aushärten des Isolierkörpers in einem Vakuumofen statt. Die Abstandshalter verbleiben beim Vergießen im flüssigen Harz und bleiben daher auch nach dem Aushärten des Harzes Bestandteil des Wicklungskörpers. Daher ist es für die Spannungsfestigkeit des Wicklungskörpers wesentlich, dass auch die Abstandshalter frei von Lufteinschlüssen ausgebildet sind, da ansonsten das Risiko einer Teilentladung besteht, durch welche die Spannungsfestigkeit des Wicklungskörpers drastisch reduziert würde.

Es ist daher üblich, die Abstandshalter ebenfalls durch Formgießen unter Vakuum herzustellen. Dieses Herstellungsverfahren ist jedoch aufwändig, insbesondere weil die Stückzahl der benötigten Abstandshalter innerhalb einer Wicklungseinheit vergleichsweise hoch ist.

Aufgabe der Erfindung ist es daher, ein Verfahren der eingangs genannten Art bereitzustellen, das einfach und kostengünstig ist.

Die Erfindung löst diese Aufgabe durch ein Verfahren der eingangs genannten Art, bei dem zumindest zwei Ausgangskomponenten in einer unter Vakuum stehenden Mischkammer miteinander unter Ausbildung einer Komponentenmischung miteinander vermischt werden. Die Komponentenmischung wird in ein ebenfalls unter Vakuum stehendes Extrudiergehäuse eines Extrudierers überführt, in dem ein Transportmittel angeordnet ist und das mit einem eine Austrittsöffnung begrenzenden Mundstück ausgerüstet ist. Das aus dem Mundstück austretende Extrudat wird zum Erhalt der Abstandshalter durch Wärmezugabe im Vakuum ausgehärtet.

Erfindungsgemäß ist ein Verfahren zur Herstellung von Abstandshaltern bereitgestellt, das kostengünstig ist und sich gleichzeitig für die Massenproduktion eignet. Dabei wird das Herstellungsverfahren nahezu ausschließlich im Vakuum durchgeführt, so dass die Abstandshalter ohne Lufteinschlüsse und frei von Feuchtigkeit hergestellt werden können. Dabei kommt im Rahmen der Erfindung ein Extrudierer zum Einsatz, der ein Extrudiergehäuse mit einem Mundstück aufweist, das eine zweckmäßig ausgestaltete Austrittöffnung begrenzt. Innerhalb des Extrudiergehäuses ist ein Transportmittel angeordnet, welches die formbare Komponentenmischung durch die Austrittsöffnung eines Mundstücks presst. Das austretende beispielsweise strangförmige Extrudat kann mit Hilfe eines geeigneten Schneidwerkzeugs zu den gewünschten fertigen Abstandshaltern geschnitten werden. Abweichend davon befinden sich im Extrudiergehäuse angehärtete vorgeformte Stücke der Komponentenmischung, so dass ein Schneiden nicht zwangsläufig erforderlich ist.

Wie bereits ausgeführt wurde, ist das im Extrudiergehäuse angeordnete Extrudat noch formbar. Beispielsweise ist das Extrudat im Extrudiergehäuse noch flüssig. Abweichend davon kann die Komponentenmischung schon teilweise ausgehärtet sein. Hierbei umfasst die Komponentenmischung beispielsweise Monomere, die mit anderen Monomeren bereits reagiert haben, und Monomere die dies noch nicht getan haben. Natürlich ist es auch möglich, dass die eingesetzten Monomere mehrere Reaktionsstellen aufweisen, wobei noch nicht alle Reaktionsstellen reagiert haben. Mit anderen Worten ist die Polymerisation noch nicht abgeschlossen. Auf diese Art und Weise bleibt die Formbarkeit des Extrudats, das sich in einem so genannten B-Zustand befindet, erhalten.

Als Transportmittel, zum Herauspressen des Extrudats aus dem Extrudiergehäuse, kommen beliebige Fördermittel, beispielsweise eine Schnecke oder ein Kolben, in Betracht.

Der Einsatz eines grundsätzlich bekannten Extrudierverfahrens zur Herstellung von Abstandshaltern im Bereich von Hochspannungsgeräten ist insoweit ungewöhnlich, als der Isolierkörper, in dem die Abstandshalter später eingebettet sind, eben nicht mit einem solchen Verfahren hergestellten werden kann. Die Herstellung eines Abstandhalters mit Hilfe eines Extrudierverfahrens im Vakuum, wobei der Abstandshalter später in einen durch Formgießen hergestellten Isolierkörper angeordnet ist, liegt nicht auf der Hand. Die Erfindung ermöglicht die Herstellungskosten der Abstandshalter und somit der gesamten Wicklungseinheit drastisch herabzusetzen.

Erfindungsgemäß wird das austretende Extrudat unter Vakuum erwärmt. Durch die Erwärmung wird die Polymerisation abgeschlossen.

Gemäß einer vorteilhaften Weiterentwicklung der Erfindung ist hinter dem Extrudiergehäuse beispielsweise ein Heizelement in Gestalt eines Heizofens angeordnet, durch den beispielsweise ein aus dem Extrudierer austretender Strang der Komponentenmischung erhitzt wird, um die Polymerisation der Komponentenmischung in Gang zu setzen oder abzuschließen. Freie Reaktionsstellen reagieren schließlich, so dass sich die gewünschte Netzstruktur des Polymers ausbildet.

Gemäß einer diesbezüglich zweckmäßigen Weiterentwicklung wird die Komponentenmischung vor dem Überführen in das Extrudiergehäuse in einem Formteil teilweise ausgehärtet. Wie bereits weiter oben ausgeführt wurde, ist es im Rahmen der Erfindung auch möglich, die Komponentenmischung anzuhärten, indem entweder durch zweckmäßige Auswahl der Komponenten oder durch Zugabe eines chemischen Starters dafür gesorgt wird, dass der Polymerisationsvorgang gestartet wird. So handelt es sich beispielsweise bei der Komponente A um einen Monomer, dessen Polymerisation durch Zugabe einer weiteren Komponente B in Gang gesetzt werden kann. Die Reaktion läuft so lange ab, bis ein so genannter B-Zustand der Komponentenmischung erreicht wird, in welcher die Komponentenmischung zwar eine gewisse Festigkeit aufweist, jedoch noch immer durch den Extrudierer verformt werden kann. So wird die Komponentenmischung beispielsweise in einem Form- oder Abgussteil angehärtet und das so entstandene Formstück anschließend in den Extrudierer gegeben, dessen Transportmittel das angehär-tete Formstück dann durch die Austrittsöffnung presst, wodurch der Komponentenmischung oder dem Extrudat die gewünschte Gestalt aufgeprägt wird. Das vollständige Aushärten erfolgt dann durch Wärmezugabe im Vakuum.

Zweckmäßigerweise werden die Abstandshalter nach dem Schneiden unter Vakuum bei einer vorbestimmten Aushärtetemperatur über einen vorbestimmten Zeitraum hinweg gelagert. Auf diese Art und Weise wird weiterhin sichergestellt, dass Lufteinschlüsse in den Abstandshaltern vermieden werden. Die Lagerung unter Vakuum kann in zweckmäßigen Lagerräumen erfolgen, die beispielsweise einer Schneideinheit nachgeordnet sind. In der Lagerkammer ist ein Vakuum angelegt.

Vorteilhafterweise werden die Ausgangskomponenten vor dem Vermischen in ein Komponentengehäuse überführt, in dem anschließend ein Vakuum angelegt wird, wobei jedes Komponentengehäuse ausgangsseitig mit einer Mischkammer verbunden wird. Von dem Komponentengehäuse gelangen die Komponenten in die Mischkammer, die beispielsweise mit Rühr- oder Mischwerkzeugen ausgerüstet ist, um eine möglichst gute Vermischung der Komponenten bereitzustellen. Von der Mischkammer aus gelangt die Komponentenmischung schließlich in das Extrudiergehäuse, aus dem heraus das Transportmittel die Mischung durch das Mundstück presst.

Eine Wicklungseinheit für ein elektrisches Hochspannungsgerät, das beispielsweise als Hochspannungsdrossel oder als Hochspannungstransformator ausgeführt ist, verfügt zweckmäßigerweise über ein erfindungsgemäß hergestellte Abstandshalter. Wie bereits weiter oben ausgeführt wurde, umfasst die Wicklungseinheit wenigstens eine Wicklung, wobei Wicklungsleiter der Wicklung zumindest teilweise durch die besagten Abstandshalter in der gewünschten Stellung gehalten werden. Dabei können die Wicklungsleiter beispielsweise durch kammartig ausgestalteten Abstandshalter, sowohl in radialer als auch in axialer oder Längsrichtung der Wicklung mit Abstand zueinander gehalten werden.

Selbstverständlich ist es auch möglich, dass die Wicklungseinheit wenigstens zwei hohlzylindrische Wicklungen aufweist, die konzentrisch zueinander angeordnet sind. Dabei dienen die Abstandshalter zum Ausrichten der Wicklungen zueinander und bevor diese mit flüssigem Isoliermittel vergossen werden. Das Vergießen erfolgt in einer zweckmäßigen Gussform innerhalb eines Vakuumofens, so dass wieder Lufteinschlüsse vermieden werden. Darüber hinaus sorgt das Vakuum dafür, dass die Isolation der Wicklungsleiter frei von Feuchtigkeit bleibt.

Gemäß einer bevorzugten Ausgestaltung umfasst die Wicklungseinheit eine Oberspannungswicklung und eine Unterspannungswicklung, die konzentrisch zueinander angeordnet sind, wobei sich die Abstandshalter zumindest teilweise zwischen der Unter- und Oberspannungswicklung erstrecken. Auf diese Weise ist die konzentrische Ausrichtung der Wicklungen beim Vergießen ermöglicht.

Hierbei ist es weiterhin vorteilhaft, wenn Abstandshalter und Isolierkörper aus dem gleichen Material gefertigt sind.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleichwirkende Bauteile verweisen und wobei
- Figur 1: ein erstes Ausführungsbeispiel des erfindungsgemäßen Verfahrens schematisch verdeutlicht,
- Figur 2: ein weiteres Ausführungsbeispiel des erfindungsgemäßen Verfahrens schematisch zeigt,
- Figur 3: ein Ausführungsbeispiel einer erfindungsgemäßen Wicklungseinheit schematisch in einer Draufsicht und
- Figuren 4 und 5: Ausführungsbeispiele von erfindungsgemäß hergestellten Abstandshaltern zeigen.

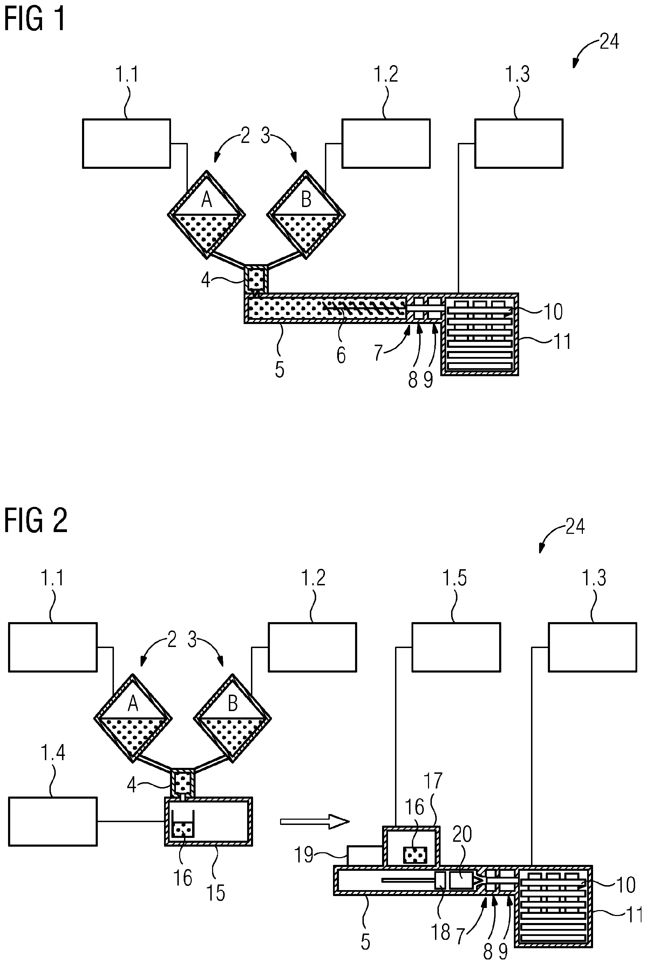

Figur 1 zeigt eine Einrichtung 24 zur Durchführung einer Variante des erfindungsgemäßen Verfahrens. Hierbei werden zunächst zwei Komponenten A und B jeweils in ein Komponentengehäuse 2 beziehungsweise 3 gegeben. Anschließend wird mittels einer Vakuumapparatur 1.1 und einer Vakuumapparatur 1.2 in jedem Komponentengehäuse 2 beziehungsweise 3 ein Vakuum erzeugt. Mit anderen Worten wird die Luft, die zunächst den Gasraum über der flüssigen Komponente A ausfüllt, abgesaugt, bis sich ein Gasdruck von unter 10 mbar einstellt. Die Vakuumapparaturen 1.1 und 1.2 umfassen eine Vakuumpumpe. Wird diese abgestellt, stellt sich ein von der Temperatur abhängiger Gleichgewichtsdampfdruck der Komponente A beziehungsweise B ein. Feuchtigkeit und insbesondere Luft ist aus den Komponentengehäusen 2 und 3 entfernt. Anschließend werden die Komponenten A und B durch die dargestellten Zuläufe in eine Mischkammer 4 überführt, die mit einem zweckmäßigen Rührwerkzeug ausgerüstet ist, das figürlich nicht dargestellt ist. In der Mischkammer werden die Komponenten A und B unter Ausbildung einer Komponentenmischung miteinander vermischt.

Die Komponentenmischung gelangt von der Mischkammer 4 in ein Extrudiergehäuse 5 eines Extrudierers in dem ebenfalls ein Vakuum herrscht. In dem Extrudiergehäuse 5 ist eine Schnecke 6 als Transportmittel angeordnet, die durch eine figürlich nicht dargestellte elektrische Antriebseinheit in Drehung versetzt wird. Dabei wird die sich im Extrudiergehäuse 5 befindliche Komponentenmischung durch eine figürlich nicht dargestellte Austrittsöffnung eines Mundstücks 7 gepresst, die an dem von der Mischkammer 4 abgewandten Ende des Extrudiergehäuses 5 angeordnet ist. Das Extrudiergehäuse 5 erstreckt sich in einer Längsrichtung und ist innen hohl ausgebildet. Das aus dem Mundstück 7 austretende Extrudat wird anschließend im Inneren eines Heizelements 8 erhitzt, so dass die Polymerisation der Komponentenmischung weiter voran getrieben und die Komponentenmischung nahezu vollständig ausgehärtet wird. Im Inneren des Heizelements 8 herrscht natürlich ebenfalls ein Vakuum. Das aus dem Mundstück 7 austretende Extrudat ist strangförmig ausgestaltet. Dem Heizelement 8 ist daher eine Schneideinheit 9 nachgeordnet, welche den Strang unter Vakuum zu dem gewünschten Abstandshalter 10 schneidet. Die Abstandshalter 10 werden anschließend in einer Lagerkammer 11 über einen vorbestimmten Zeitraum, beispielsweise 2 Stunden lang, bei einer Temperatur von etwa 20 bis 80 Grad gelagert. In der Lagerkammer 11 ist mit Hilfe der Vakuumapparatur 1.3 ein Vakuum angelegt.

Figur 2 verdeutlicht eine weitere Variante des erfindungsgemäßen Verfahrens. Auch hier werden wieder zwei Komponenten A und B in ein Komponentengehäuse 2 beziehungsweise 3 gegeben, wobei mit Hilfe der Vakuumapparatur 1.1 beziehungsweise 1.2 in den Komponentengehäusen 2 und 3 wieder ein Vakuum angelegt wird. Auf diese Weise wird die vorhandene Luft entfernt bis der Gasraum oberhalb der flüssigen Komponenten nahezu ausschließlich mit der gasförmigen Komponente A beziehungsweise B befüllt ist. Die Komponenten A und B werden wieder in der Mischkammer 4 miteinander vermischt, von wo sie im flüssigen Zustand in ein Formteil 16 gelangen, das an einer Anhärtekammer 15 angeordnet ist. In der Anhärtekammer 15 ist über die Vakuumapparatur 1.4 ein Vakuum angelegt. Optional ist die Anhärtekammer mit einem Heizelement ausgerüstet, das so eingestellt ist, dass die in dem Formteil 16 angeordnete Komponentenmischung in einen so genannten B-Zustand überführt wird, in dem die Komponentenmischung zwar eine gewisse Festigkeit aufweist, jedoch auch weiterhin durch den Extrudierer verformbar ist.

Die angehärtete Komponentenmischung im B-Zustand wird anschließend in eine Eingangskammer 17 überführt, in der über die Vakuumapparatur 1.5 wieder ein Vakuum angelegt ist. Dabei ist die Eingangskammer 17 über eine Verbindungsleitung 19 mit dem Extrudiergehäuse 5 des Extrudierers verbunden. Mit anderen Worten ist auch in dem Extrudiergehäuse 5 ein Vakuum angelegt. Als Transportmittel 18 ist hier ein Extrudierkolben vorgesehen, welcher den von der Eingangskammer 17 in das Extrudiergehäuse 5 eingeführten Komponentenmischungsblock oder mit anderen Worten die vorgeformte Komponentenmischung im B-Zustand durch die Austrittsöffnung 20 des Mundstücks 7 presst.

Das aus dem Mundstück 7 austretende Extrudat wird wieder in einem mit Hilfe eines Heizelements 8 erhitzt und somit weiter ausgehärtet, wobei durch ein geeignetes Schneidwerkzeug 9 die gewünschten Abstandshalter 10 bereitgestellt werden, die in der Lagerkammer 11 über einen vorbestimmten Zeitraum hinweg bei einer vorbestimmten Temperatur gelagert werden. Mit Hilfe der Vakuumapparatur 1.3 ist in der Lagerkammer 11 ein zweckmäßiges Vakuum erzeugt.

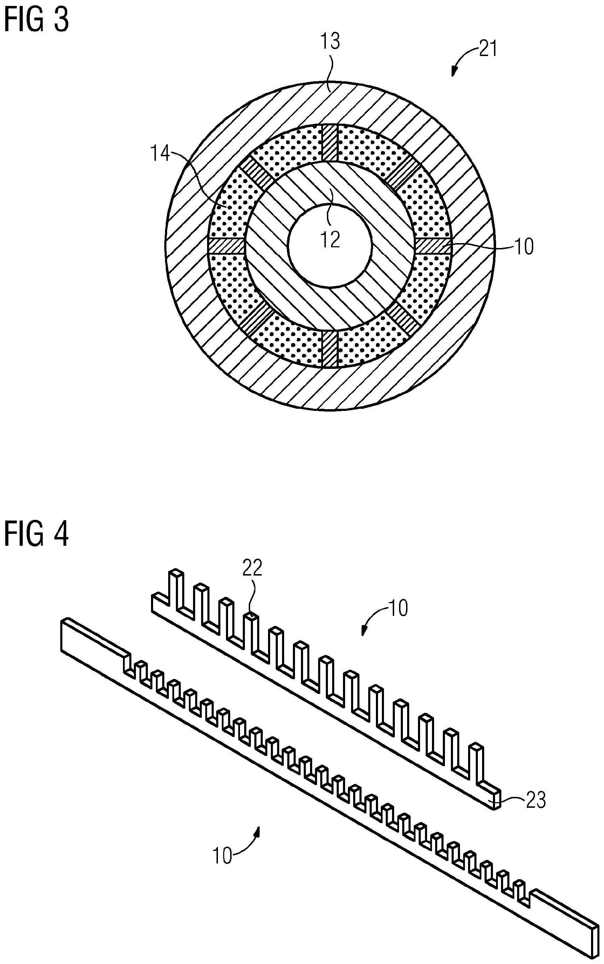

Figur 3 zeigt ein Ausführungsbeispiel eines erfindungsgemäßen Wicklungskörpers 21, der eine ringförmige Unterspannungswicklung 12 und eine diese vollumfänglich umschließende Oberspannungswicklung 13 aufweist. Unterspannungswicklung 12 und Oberspannungswicklung 13 sind konzentrisch zueinander angeordnet. Hierzu werden die Unter- und Oberspannungswicklung 12 und 13 mit Isoliermaterial, beispielsweise Harz, im flüssigen Zustand vergossen. Anschließend wird das Isoliermaterial 14 im Vakuumofen ausgehärtet. Um Unter- und Oberspannungswicklung 12 und 13 beim Vergießen konzentrisch zueinander zu halten, sind Abstandshalter 10 vorgesehen, die sich strahlenförmig oder radial zwischen der Unter- und Oberspannungswicklung 12 und 13 erstrecken.

Figur 4 zeigt ein Ausführungsbeispiel eines gemäß dem erfindungsgemäßen Verfahren hergestellten Abstandshalters 10, der in dem in Figur 4 gezeigten Ausführungsbeispiel eine so genannte Kammstruktur ausbildet, bei der freie Schenkel 22 von einem gemeinsamen Steg 23 aufragen. Die Wicklungsleiter einer Wicklungslage der Wicklung können so zwischen die Schenkel 22 eingelegt werden. Durch den Steg 23 sind die übereinander liegenden Wicklungslagen in Längsrichtung voneinander beabstandet.

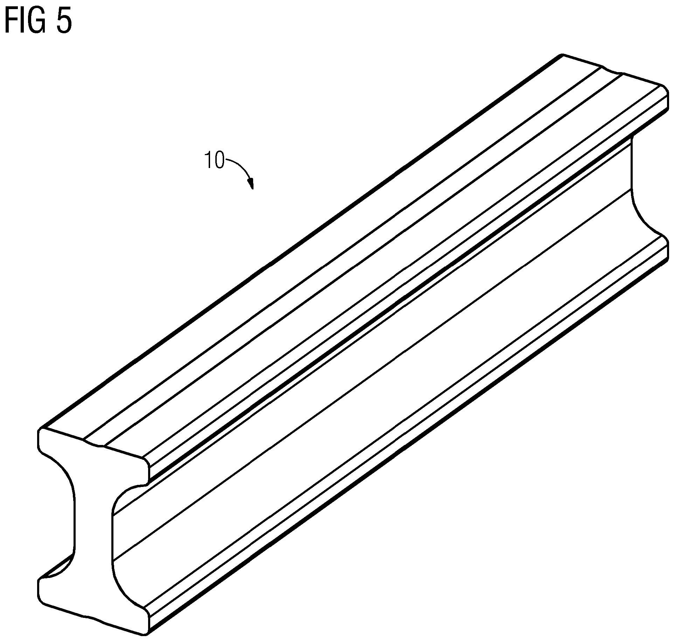

Figur 5 zeigt ein weiteres Ausführungsbeispiel eines Abstandshalters 10 vor dem Zerschneiden, der ein so genanntes I-Profil aufweist.

## Patentansprüche

1. Verfahren zum Herstellen von Abstandshaltern (10) für eine Wicklungseinheit (21) eines elektrischen Hochspannungsgeräts, bei dem
- zumindest zwei Ausgangskomponenten (A,B) in einer unter Vakuum stehenden Mischkammer (4) miteinander unter Ausbildung einer Komponentenmischung miteinander vermischt werden,
- die Komponentenmischung in ein ebenfalls unter Vakuum stehendes Extrudiergehäuse (5) eines Extrudierers überführt wird, in dem ein Transportmittel (6,18) angeordnet ist und das mit einem eine Austrittsöffnung (20) begrenzenden Mundstück (7) ausgerüstet ist, und
- das aus dem Mundstück austretende Extrudat zum Erhalt der Abstandshalter (10) durch Wärmezugabe im Vakuum ausgehärtet wird.

2. Verfahren nach Anspruch 1,
**dadurch gekennzeichnet, dass** das austretende Extrudat durch den Extrudierer nachgeordnetes Heizelement (8) unter Vakuum erhitzt wird.

3. Verfahren nach Anspruch 1 oder 2,
**dadurch gekennzeichnet, dass**
die Komponentenmischung vor dem Überführen in das Extrudiergehäuse (5) in einem Formteil (16) teilweise aktiviert wird.

4. Verfahren nach Anspruch 3,
**dadurch gekennzeichnet, dass**
die Abstandshalter (10) unter Vakuum bei einer vorbestimmten Aushärtetemperatur über einen vorbestimmten Zeitraum hinweg gelagert werden.

5. Verfahren nach einem der vorhergehenden Ansprüche,
**dadurch gekennzeichnet, dass**
die Ausgangskomponenten vor dem Vermischen jeweils in ein zugeordnetes Komponentengehäuse (2,3) überführt werden, in dem Komponentengehäuse (2,3) ein Vakuum angelegt wird und jedes Komponentengehäuse (2,3) ausgangsseitig mit der Mischkammer (4) verbunden wird.

6. Verfahren nach einem der vorhergehenden Ansprüche,
**dadurch gekennzeichnet, dass**
das aus dem Mundstück (7) austretende Extrudat durch ein unter Vakuum stehendes Schneidwerkzeug (9) zu Abstandshaltern geschnitten wird.

## Claims

1. Method for producing spacers (10) for a winding unit (21) of an electrical high-voltage device, wherein
- at least two starting components (A, B) are mixed together in a mixing chamber (4) under a vacuum to form a component mixture,
- the component mixture is transferred to an extrusion housing (5) of an extruder, which is likewise under a vacuum, in which a transport means (6, 18) is arranged and which is equipped with a mouthpiece (7) which delimits an outlet opening (20), and
- extrudate exiting the mouthpiece is cured by the application of heat in a vacuum, in order to obtain the spacers (10).

2. Method according to Claim 1,
**characterized in that**
extrudate exiting the extruder undergoes heat-up under a vacuum by means of a heating element (8) which is arranged down-circuit of the extruder.

3. Method according to Claim 1 or 2,
**characterized in that**
the component mixture, prior to the transfer thereof to the extrusion housing (5), is partially activated in a mold (16).

4. Method according to Claim 3,
**characterized in that**
the spacers (10) are stored under a vacuum at a predefined curing temperature for a predefined time period.

5. Method according to one of the preceding claims,
**characterized in that**
the starting components, prior to the mixing thereof, are transferred to an associated component housing (2, 3), in which component housing (2, 3) a vacuum is applied, and each component housing (2, 3) is connected, on the output side, to the mixing chamber (4).

6. Method according to one of the preceding claims,
**characterized in that**
extrudate exiting the mouthpiece (7) is cut into spacers by means of a cutting tool (9) under a vacuum.

## Revendications

1. Procédé de fabrication d'entretoises (10) d'une unité (21) d'enroulement d'un appareil électrique à haute tension, dans lequel
- on mélange au moins deux constituants (A, B) de départ dans une chambre (4) de mélange sous vide en formant un mélange de constituants,
- on transfère le mélange de constituants dans un cylindre (5) également sous vide d'une extrudeuse, dans lequel est disposé un moyen (6, 18) de transport et qui est équipé d'une filière (7) délimitant une ouverture (20) de sortie, et
- on durcit, sous vide par addition de chaleur, l'extrudat sortant de la filière pour obtenir l'entretoise (10).

2. Procédé suivant la revendication 1,
**caractérisé en ce que**
l'on chauffe sous vide l'extrudat sortant par un élément (8) de chauffage monté en aval de l'extrudeuse.

3. Procédé suivant la revendication 1 ou 2,
**caractérisé en ce que**
l'on active, en partie en une pièce (16) moulée, le mélange de constituants avant le transfert dans le cylindre (5) de l'extrudeuse.

4. Procédé suivant la revendication 3,
**caractérisé en ce que**
l'on stocke les entretoises (10) sous vide à une température de durcissement définie à l'avance pendant une durée définie à l'avance.

5. Procédé suivant l'une des revendications précédentes,
**caractérisé en ce que**
l'on transfert les constituants de départ, avant le mélange, respectivement dans une boîte (2, 3) à constituants associée, on applique un vide dans la boîte (2, 3) à constituants et on met chaque boîte (2, 3) à constituants du côté de la sortie en communication avec la chambre (4) de mélange.

6. Procédé suivant l'une des revendications précédentes,
**caractérisé en ce que**
l'on découpe en entretoises l'extrudat sortant de la filière (7) par un outil (9) de coupe sous vide.
